**Europäisches Patentamt**

**European Patent Office**

**Office européen des brevets**

(19)

(11) Numéro de publication: **0 064 016**
**B1**

(12)

# FASCICULE DE BREVET EUROPÉEN

(45) Date de publication du fascicule du brevet:
**23.07.86**

(51) Int. Cl.⁴: **H 02 H 3/14,** H 02 H 3/02

(21) Numéro de dépôt: **82420056.2**

(22) Date de dépôt: **15.04.82**

(54) **Système de sécurité à l'encontre de la mise sous tension de structures métalliques.**

(30) Priorité: **15.04.81 FR 8107739**

(43) Date de publication de la demande:
**03.11.82 Bulletin 82/44**

(45) Mention de la délivrance du brevet:
**23.07.86 Bulletin 86/30**

(84) Etats contractants désignés:
**BE CH DE GB IT LI SE**

(56) Documents cité:
**EP-A-0 018 867**
**DE-C-209 191**
**DE-C-421 798**
**DE-C-755 291**
**FR-A-839 744**
**FR-A-1 460 049**
**US-A-3 823 342**

(73) Titulaire: **FERRAZ Société Anonyme, 28 Rue Saint Philippe, F-69003 Lyon (FR)**

(72) Inventeur: **Mulertt, Charles, 105 Rue Tête d'Or, F-69006 Lyon (FR)**
Inventeur: **Danthony, Jacques, 16 ter Rue Greuze, F-69100 Villeurbanne (FR)**
Inventeur: **Cinquin, Jean- Pierre, Siccieu- Saint-Julien, F-38460 Cremieu (FR)**

(74) Mandataire: **Monnier, Joseph, Cabinet Monnier 142- 150, Cours Lafayette, F-69003 Lyon (FR)**

## Description

On sait qu'il arrive parfois que des structures métalliques, telles par exemple que des poteaux supportant une ligne électrique pour chemin de fer, soient accidentellement mises sous tension sous l'effet d'un contact intempestif ou de courants de fuite. Il y a alors danger d'électrocution.

On a proposé d'éviter ce danger en prévoyant des relais thermiques ou magnétiques qui, dés qu'un potentiel anormal est détecté sur la structure, relient positivement celle-ci à la masse. Mais de tels relais ont un temps de réponse non négligeable, suffisant pour qu'une personne touchant la structure soit électrocutée. On a également suggéré d'insérer entre la structure et la masse un éclateur ou une cellule à gaz qui limite le potentiel de la structure, mais celui-ci reste cependant dangereux.

D'autres propositions ont été faites. C'est ainsi que le brevet DE-C-755 291 décrit un systéme de sécurité à l'encontre de la mise sous tension de structures métalliques par rapport à la terre, qui comprend un interrupteur de court-circuitage à réponse rapide monté entre la structure et la terre. Cet interrupteur est actionné par un relais approprié reagissant à une différence de tension entre la structure et la terre et un éclateur est également monté entre ces deux points.

De la même manière le brevet US-A-3 823 342 décrit un systéme destiné à mettre à la terre le bâti d'une machine dans le cas où une tension excessive par rapport à la terre apparait sur le bâti. Le système comprend un dispositif détecteur avec une diode, un diac et un thyristor pour mettre le bâti à la terre et actionner un relais en cas de défaut.

On citera encore le brevet DE-C-421 798 qui a pour objet un contacteur contre les surtensions destiné à relier à la terre une structure à protéger (antenne) lorsqu'une tension excessive apparait sur celle-ci. Le contacteur est commandé par une cartouche à fusible placée entre l'antenne et la terre de telle sorte que lorsque le fusible fond, le contacteur est actionné à la fermeture.

Ces agencements présentent un certain nombre d'inconvénients.

Pour surmonter ces inconvénients, l'invention a pour objet un système de sécurité du genre comprenant d'une part un interrupteur de court-circuitage à réponse rapide qui est monté entre la structure à protéger et la terre et qui est actionné à la fermeture par des moyens réagissant à une différence de tension entre la structure et la terre, et d'autre part un éclateur de sécurité branché entre la structure à protéger et la terre pour s'amorcer sous l'effet d'une tension supérieure à un seuil déterminé, lequel systéme est caractérisé en ce que les moyens destinés à l'actionnement de l'interrupteur comprennent en combinason un dispositif détecteur de tension a semi-conducteur qui détect la tension présente entre la structure et la terre et qui devient conducteur dès que cette tension dépasse un faible seuil de conduction, inférieur à celui de l'éclateur et ne comportant aucun danger d'électrocution, et une cartouche à fusible du type à percuteur, montée en série avec le dispositif détecteur précité entre ladite structure et la terre de façon que son percuteur commande à la fermeture l'interrupteur de court-circuitage lorsque le dispositif détecteur est conducteur.

On comprend que dans ces conditions, si un conducteur sous tension élevée vient à toucher la structure, celle-ci est tout d'abord mise à la terre par le détecteur et les fusibles de la cartouche. Ces fusibles fondent, mais dés que leur fusion débute le percuteur commence lui-même à actionner l'interrupteur, de sorte que lorsque le circuit est interrompu dans la cartouche cet interrupteur a déjà amorcé son mouvement. Le temps intermédiaire entre l'ouverture du circuit à travers la cartouche et la fermeture complète de l'interrupteur est donc beaucoup plus faible qu'avec les dispositions de la technique antérieure.

Le dessin annexé, donné à titre d'exemple, permettra de mieux comprendre l'invention, les caractéristiques qu'elle présente et les avantages qu'elle est susceptible de procurer:

Fig. 1 est une vue schématique montrant une forme d'exécution de l'invention, les pièces étant représentées à la position normale de repos.

Fig. 2 est une coupe de détail suivant II-II (fig. 1).

Fig. 3 reproduit en partie fig. 1, mais en montrant les pièces après fermeture du court-circuiteur de mise à la terre.

Fig. 4 et 5 sont des vues partielles représentant une variante de réalisation du court-circuiteur, respectivement à la position normale d'ouverture et à celle de fermeture après fonctionnement de la cartouche à fusible.

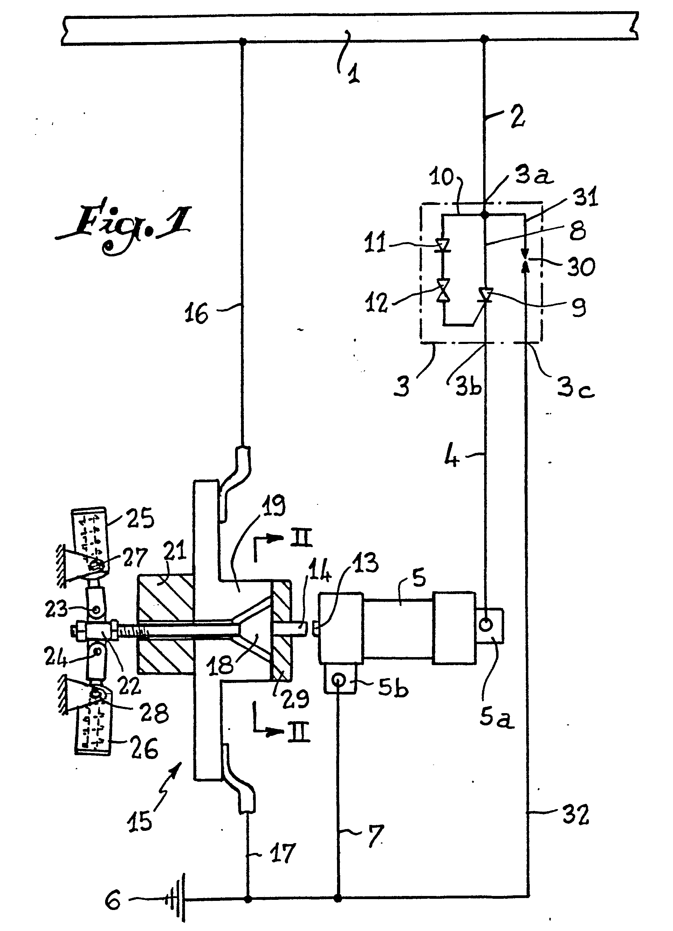

En fig. 1 l'on a schématisé en 1 la structure métallique à laquelle le système de sécurité doit être associé. On peut supposer par exemple qu'il s'agit d'un poteau supportant le conducteur de contact d'une voie de chemin de fer électrique. Un conducteur 2 relie cette structure à l'entrée 3a d'un détecteur 3 de différence de potentiel (détecteur voltmétrique) dont la sortie 3b est reliée par un conducteur 4 à l'une 5a des têtes d'une cartouche à fusibles 5, l'autre tête 5b étant reliée à la masse ou terre 6 par un conducteur 7. Dans le cas précité d'une voie de chemin de fer électrique, cette masse 6 est avantageusement constituée par les rails de la voie; dans d'autres cas ce peut être une prise de terre soigneusement établie.

A l'intérieur du détecteur 3 l'entrée 3a et la sortie 3b sont reliées par un circuit 8 sur lequel est interposé un thyristor 9. De l'entrée 3a part encore un autre circuit 10 qui renferme une diode 11 et une diac 12 propre à jouer le rôle d'élément à seuil de conduction; ce second circuit 10 aboutit à la gâchette du thyristor 9.

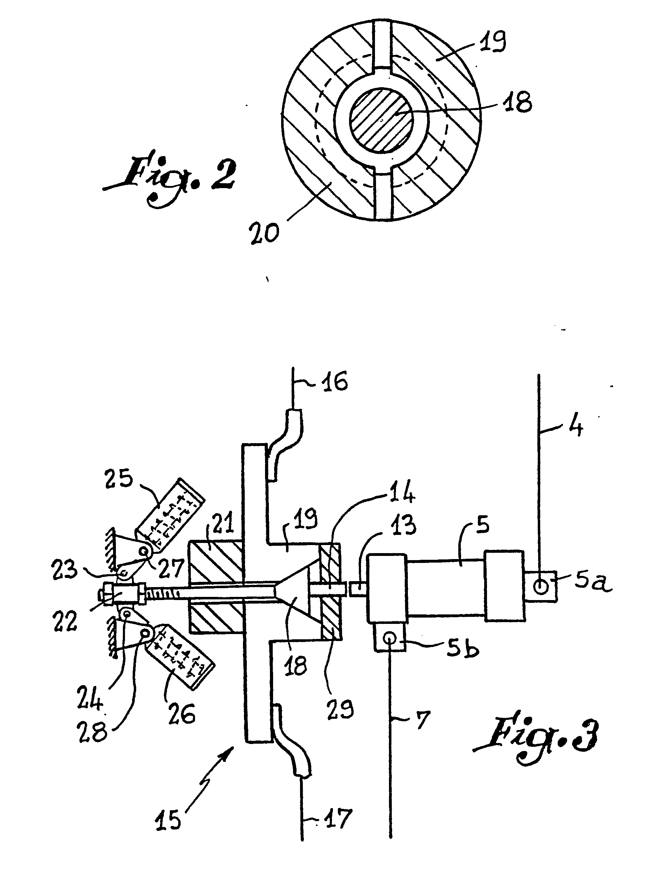

La cartouche 5 comporte ce qu'on appelle un percuteur, c'est-à-dire un bouton 13, normalement effacé à son intérieur, mais qui vient dépasser quand elle a fonctionné. Dans l'exemple représenté on a supposé que ce percuteur était axial, mais il pourrait comporter une autre disposition, notamment être monté latéralement sur le corps de la cartouche. De toute façon cette dernière est disposée de manière que son percuteur 13 puisse venir agir sur la tige 14 d'un interrupteur ou court-circuiteur 15, normalement ouvert, que des conducteurs à forte section 16 et 17 relient d'une part à la structure 1, d'autre part à la terre 6. Dans la forme d'exécution de fig. 1 ce court-circuiteur comprend un cône 18, monté sur la tige 14 et propre à venir court-circuiter deux contacts fixes 19, 20 (fig. 2) auxquels aboutissent les conducteurs 16 et 17 précités. Comme montré, ces contacts fixes représentent chacun la moitié d'un logement propre à recevoir le cône 18 en lui assurant une grande surface de portée. La tige 14 se prolonge au-delà des contacts 19, 20; elle traverse un bloc isolant 21 propre à former support des contacts précités, puis elle vient porter une courte traverse 22 dont les extrémités sont articulées en 23 et 24 à deux dispositifs 25, 26 à ressort de compression, eux-mêmes articulés en 27 et 28 à la partie fixe de l'appareil. On comprend que chaque dispositif 25, 28 comprend une tige sur laquelle est monté une sorte de piston propre à se déplacer dans un cyclindre renfermant le ressort. On conçoit en outre que les deux dispositifs constituent avec la traverse 22 un mécanisme à passage du point mort d'équilibre instable. Les choses sont réglées de façon qu'à la position de repos de fig. 1, le cône 18 étant dégagé des contacts 19, 20, le mécanisme en question soit juste en avant de ladite position d'équilibre instable, ce cône 18 tendant donc à se déplacer vers la droite et butant ainsi contre une traverse d'arrêt 29, qui constitue simultanément guide de la tige 14.

Le détecteur 3 renferme encore un éclateur 30 interposé sur un circuit 31 qui, partant de l'entrée 3a, aboutit à une seconde sortie 3c qu'un conducteur 32 relie à la terre 6. Cet éclateur est établi pour s'amorcer sous une différence de potentiel supérieure au seuil de conduction de la diac 12, mais cependant assez modérée et ne comportant pas de risque d'électrocution instantanée. Par exemple, si le seuil précité est de 30 volts, la tension d'amorçage de l'éclateur 30 peut être de l'ordre de 80 à 90 volts. Dans la pratique cet éclateur peut être réalisé sous la forme d'une ampoule renfermant un gaz approprié sous une pression déterminée.

Le fonctionnement est le suivant:

Dans les conditions normales, les différences de potentiel ou tensions susceptibles d'apparaître entre la structure et la terre 6 sont très faibles et n'atteignent pas le seuil de conduction de la diac 12. On notera d'ailleurs que si ces tensions sont des ondes d'induction alternatives, la diode 11 les bloque dans un sens en ne les laissant passer que dans le sens correspondant à une mise sous tension intempestive de la structure. Cela correspond notamment au cas d'une ligne de chemin de fer électrifiée en courant continu.

Quoi qu'il en soit, la gâchette du thyristor 9 ne reçoit aucun signal, le thyristor lui-même est donc bloqué et la cartouche 5 n'est traversée par aucun courant.

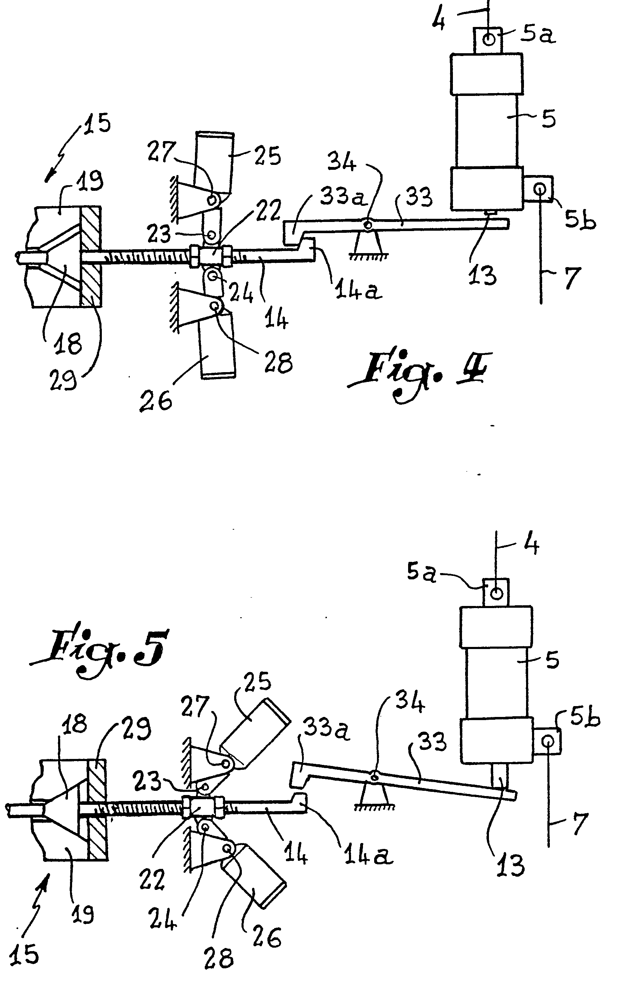

Dès que la différence de potentiel entre la structure 1 et la masse ou terre 6 dépasse le seuil de la diac 12, il y a conduction, la gâchette du thyristor 9 déclenche et celui-ci conduit. S'il y a réellement mise sous tension de la structure, et non pas onde induite passagère, le courant qui traverse la cartouche 5 est suffisant pour faire sauter celle-ci, le percuteur 13 avance vers la gauche et il vient frapper la tige 14 qu'il déplace dans une mesure très faible, mais suffisante pour passer le point mort du mécanisme d'équilibre instable 25-26. La tige 14 est alors fortement sollicitée vers la gauche et le cône 18 vient s'engager à force entre les deux contacts 18, 19. Le court-circuiteur passe donc à la position fermée de fig. 3 de sorte que la structure 1 se trouve mise à la terre à travers des conducteurs de forte section, ce qui élimine tout risque d'électrocution à son contact et court-circuite tous les courants éventuels de fuite par le sol. Bien entendu, cette mise à la terre positive de la structure peut éventuellement entraîner une surintensité sur la ligne intéressée et faire déclencher un disjoncteur. De toute manière elle reste assurée aussi longtemps que la cartouche 5 n'a pas été changée et que le court-circuiteur 15 n'a pas été ramené à la position d'ouverture (en admettant bien entendu que le défaut qui a provoqué la mise sous tension de la structure 1 ait été éliminé).

Entre l'instant où le potentiel de la structure 1 par rapport à la masse atteint le seuil de conduction du détecteur 3 et celui où le court-circuiteur 15 est fermé, il s'écoule obligatoirement un temps très court, mais néammoins appréciable (quelques millisecondes par exemple). Si le potentiel appliqué à la structure est élevé (par exemple 1 500 volts dans le cas d'une ligne de chemin de fer électrique), cela pourrait être suffisant pour électrocuter une personne se trouvant alors en contact avec la structure. Ce danger est évité par l'éclateur 30 qui pendant ce très court instant assure un parcours de décharge empêchant le potentiel de la structure de s'élever au-dessus de sa tension d'amorçage.

Même si cette tension est de l'ordre d'une centaine de volts, elle n'est pas suffisante pour provoquer un phénomène d'électrocution dans un temps aussi court.

L'on peut bien entendu imaginer d'associer à l'appareil un circuit de signalisation optique, acoustique ou autre, permettant d'alerter aussitôt le personnel d'entretien pour qu'il remédie au défaut qui a provoqué la mise sous tension de la structure.

Dans la formé d'exécution de fig. 1 à 3, le percuteur 13 doit exercer sur la tige 14 du court-circuiteur 15 une poussée suffisante pour la déplacer quelque peu à l'encontre des forces de frottement, lesquelles sont relativement élevées, puisque alors la réaction des ressorts est à son maximum. On peut certes prévoir des articulations à billes, à aiguilles ou à couteaux pour réduire ces efforts, mais cela complique la construction. Fig. 4 et 5 indiquent une variante qui évite cet inconvénient. On retrouve ici la tige 14 portant le cône 18 propre à coopérer avec les contacts fixes tels que 19. On retrouve également le mécanisme articulé avec les deux dispositifs à ressort 25, 26, qui sont ici disposés entre le cône 18 et la cartouche à fusibles 5, et non plus au-delà du court-circuiteur, ce qui ne constitue qu'une différence constructive sans importance. Mais les choses sont réglées de manière qu'à la position de repos (court-circuiteur ouvert), le mécanisme 25-26 ait déjà dépassé sa position d'équilibre instable dans le sens de déplacement vers la gauche (sens de fermeture du court-circuiteur).

Le court-circuiteur 15 tend donc à se fermer sous l'effet des ressorts mais sa tige 14 comporte en bout une dent 14a qui est normalement retenue par l'extrémité crochue 33a d'un levier 33 articulé en 34 au bâti de l'appareil. La cartouche 5 est disposée de manière que son percuteur 13 vienne agir sur ce levier pour dégager l'extrémité 33a de la dent 14a.

Dans ces conditions, au repos le court-circuiteur 15 est maintenu à la position d'ouverture par le levier 33 (fig 4), mais aussitôt que le percuteur 13 sort de la cartouche, ce levier tourne en dégageant la dent 14a, ce qui permet à un court-circuiteur 15 de se fermer sous l'effet des dispositifs à ressort 25, 26 (fig. 5). Grâce à la présence de la retenue par la dent 14a et à la démultiplication d'effort que peut réaliser le levier 33, la force nécessaire au déclenchement peut être très réduite, ce qui augmente la fiabilité de l'appareil et dispense de l'associer au percuteur un ressort particulièrement fort.

Dans la pratique on peut avoir avantage à combiner le détecteur 3 avec la cartouche 5 de manière à réaliser un ensemble unique interchangeable, l'expérience montrant que non seulement la cartouche, mais également le détecteur qui a pu souffrir de la surintensité momentanée à laquelle il a été soumis. Mais cette combinaison peut en outre présenter un avantage technique particulier si l'on a soin de disposer l'éclateur 30 au voisinage immédiat du ou d'un fusible, ou mieux, du point faible de ce fusible. On sait en effet qu'on utilise fréquemment dans les cartouches un ruban fusible sur lequel on fait apparaître un point de moindre section par une perforation, un étranglement ou analouge, de mainère à localiser le début de fusion. Si l'éclateur se trouve au voisinage immédiat de ce point, il reçoit les gaz ionisés dès le début du fonctionnement de la cartouche et son amorçage peut alors s'effectuer sous une tension nettement abaissée. Il est ainsi possible de le réaliser simplement sous la forme de deux électrodes très rapprochées, sans ampoule à gaz sous pression réduite, tout en étant assuré que la tension d'amorçage sera assez faible pour éviter tout danger d'électrocution immédiate.

Bien entendu pour obtenir le résultat technique précité il suffit de combiner à la cartouche l'éclateur seul, le reste du détecteur pouvant rester à part.

On peut notamment à cet égard prévoir à l'intérieur de la cartouche une petite chambre dans laquelle se trouvent à la fois le point ou zone affaibli du fusible et l'éclateur, cette chambre étant délimitée par des parois la séparant de la masse de remplissage de matière d'extinction d'arc généralement prévue dans les cartouches.

## Revendications

1. Système de sécurité à l'encontre de la mise sous tension d'une structure métallique (1) par rapport à la terre (6), du genre comprenant d'une part un interrupteur de court-circuitage (15) à réponse rapide qui est monté entre la strucure à protéger (1) et la terre (6) et qui est actionné à la fermeture par des moyens réagissant à une différence de tension entre la structure et la terre, et d'autre part un éclateur de sécurité (30) branché entre la structure à protéger (1) et la terre (6) pour s'amorcer sous l'effet d'une tension supérieure à un seuil déterminé, caractérisé en ce que les moyens destinés à l'actionnement de l'interrupteur (15) comprennent en combinaison un dispositifs détecteur de tension (9,12) à semi-conducteur qui détecte la tension présente entre la structure (1) et la terre (6) et qui devient conducteur des que cette tension dépasse un faible seuil de conduction, inférieur à celui de l'éclateur (30) et ne comportant aucun danger d'électrocution, et une cartouche à fusible (5) du type à percuteur, montée en série avec le dispositif détecteur précité entre ladite structure et la terre de façon que son percuteur (13) commande à la fermeture l'interrupteur de court-circuitage (15) lorsque le dispositif détecteur (9, 12) est conducteur.

2. Système suivant la revendication 1, caractérisé en ce que l'éclateur (30) est combiné avec la cartouche (5) de manière à se trouver au voisinage immédiat dela zone du fusible où s'amorce l'arc de rupture.

3. Système suivant l'une quelconque des revendications précédentes, caractérisé en ce que le dispositif détecteur comprend un élément semi-conducteur (12) à seuil de conduction et un thyristor (9) commandé par le signal provenant de cet élément.

4. Système suivant l'une quelconque des revendications précédentes, applicable au cas de structures susceptibles d'être reliées intempestivement à une ligne à courant continu, caractérisé en ce qu'il comprend une diode (11) en série avec le dispositif détecteur pour éliminer l'influence d'ondes induites éventuelles.

5. Système suivant l'une quelconque des revendications précédentes, caractérisé en ce que l'interrupteur de court-circuitage (15) comprend un contact mobile (18) associé à un mécanisme (25-26) à passage du point d'équilibre instable et qui au repos se trouve immédiatement en avant de ce point.

## Patentansprüche

1. Sicherheitsschaltung zum Verhindern des Anlegens einer Spannung gegenüber Erde (6) an eine metallische Struktur (1), einerseits mit einem schnellwirkenden Kurzschließer (15), der zwischen die zu schützende metallische Struktur (1) und die Erde (6) geschaltet ist und der zum Schließen Mittel aufweist, die auf einen Spannungsunterschied zwischen der Struktur (1) und der Erde (6) ansprechen und andererseits mit einer Überspannungs-Ableitungsstrecke (30), die zwischen die zu schützende Struktur (1) und die Erde (6) geschaltet ist und die unter Einwirkung einer Spannung oberhalb einer bestimmten Einsatzspannung diese ableitet, dadurch gekennzeichnet, daß die Mittel zum Schließen des Kurzschließers (15) in Kombination einen Spannungswächter mit Halbleitern (9-12), die die zwischen der Struktur (1) und der Erde (6) anliegende Spannung erfassen und leitend werden sobald diese Spannung den unter der Einsatzspannung der Überspannungs-Ableitungsstrecke (30) liegenden Schwellenwert der Leitfähigkeit geringfügig überschreitet und der eine Gefahr tödlicher Stromschläge ausschließt enthalten und weiterhin eine Schmelzsicherung (5) mit einem Schlagbolzen, die zwischen die Struktur (1) und die Erde (6) mit dem Spannungswächter derart in Reihe geschaltet ist, daß ihr Schlagbolzen (13) das Schließen des Kurzschließers (15) dann auslöst, wenn der Spannungswächter (9-12) leitend geworden ist.

2. Sicherheitsschaltung nach Anspruch 1, dadurch gekennzeichnet, daß die Überspannungs-Ableitungsstrecke (30) so mit der Schmelzsicherung (5) verbunden ist, daß sie sich in unmittelbarer Nachbarschaft zur Schmelzzone mit beim Ansprechen auftretendem Abschaltbogen befindet.

3. Sicherheitsschaltung nach einem der vorstehenden Ansprüche, dadurch gekennzeichnet, daß der Spannungswächter ein Halbleiterelement (12) mit einem Schwellenwert für die Leitfähigkeit und einen Tyristor (9) enthält, wobei der Tyristor (9) durch das Signal des Halbleiterelements angesteuert wird.

4. Sicherheitsschaltung nach einem der vorstehenden Ansprüche, verwendbar bei einer Struktur, die an Gleichstrom angeschlossen durch ungewollte Einflüsse erregbar ist, dadurch gekennzeichnet, daß eine Diode (11) in Reihe mit dem Spannungswächter (8,12) geschaltet ist, um die Beeinflussung durch möglicherweise induzierte Wechselspannungen auszuschließen.

5. Sicherheitsschaltung nach einem der vorstehenden Ansprüche, dadurch gekennzeichnet, daß der Kurzschließer (15) einen bewegbaren Kontakt (18) aufweist, der mit einem einen Punkt instabilen Gleichgewichts aufweisendes Getriebe (25 - 26) mit einer Ruhelage unmittelbar von diesem Punkt des instabilen Gleichgewichts verbunden ist.

## Claims

1. Safety system protecting against the application of voltage to a metal structure (1) with respect to ground (6) of the type including on the one hand a fast response short-circuiting switch (15) which is connected between the structure to be protected (1) and ground (6) and which is actuated to close by means reacting to a voltage difference between the structure and ground, and on the other hand, a safety arrester (30) connected between the structure to be protected (1) and ground (6) in order to strike under the effect of a voltage higher than a determined threshold, characterized in that the means of actuating the switch (15) include in combination a semiconductor voltage detector device (9-12) which detects the voltage present between the structure (1) and ground (6) and which becomes conducting as soon as this voltage exceeds a low conduction threshold, lower than that of the arrester (30) and not presenting any danger of electrocution, and a fuse cartridge (5) of the type having a firing pin, connected in series with the above mentioned detector device between the said structure and ground in such a way that its firing pin (13) controls the closure of the short-circuiting switch (15) when the detector device (9, 12) is conducting.

2. System according to Claim 1, characterized in that the arrester (30) is combined with the cartridge (5) in such a way that it is in the immediate vicinity of the area of the fuse in which the breaking arc strikes.

3. System according to either of the preceding claims, characterized in that the detector device includes a semi-conductor element (12) having a conduction threshold and a thyristor (9) controlled by the signal coming from this element.

4. System according to any of the preceding claims, applicable in the case of structures that could be accidentally connected to a direct current line, characterized in that it includes a diode (11) in series with the detector device (9, 12) in order to eliminate the effect of possible induced waves.

5. System according to any of the preceding claims, characterized in that the short-circuiting switch (15) includes a moving contact (18) attached to a mechanism (25-26) which passes through the point of unstable equilibrium and which in the rest state is immediately in front of this point.

Fig.1

0 064 016

Fig. 2

Fig. 3

3

Fig. 4

Fig. 5